# EUROPEAN PATENT APPLICATION

(11) **EP 0 697 315 A2**
(43) Date of publication of application: **21.02.1996**
(21) Application number: 95305750.2
(22) Date of filing: 17.08.1995
(51) Int. Cl.: B60T 8/36, F16K 31/02

(54) **Valve utilising shape memory alloys and an anti-lock brake system incorporating the valve**

(30) Priority: 17.08.1994 KR 9420227; 17.08.1994 KR 9420228
(71) Applicant: DAEWOO ELECTRONICS CO., LTD, Seoul (KR)
(72) Inventor: Kim, Sang Kook, Seoul (KR); Oh, PahngRoc, Ku, Seoul (KR); Lee, Hong Jae, Seoul (KR)
(74) Representative: Needle, Jacqueline

(57) **Abstract**

A valve (500) has a pressure port (316) and an exhaust port (320) controlled by a reciprocable valve spool (520). A bias spring (530) maintains the valve spool (520) in its first position in which pressure port (316) is open and exhaust port (322) is closed. Where the valve (500) is used in an anti-lock braking system, in this first position brake fluid is flowed via an inlet (318) and bore (312) out of the pressure port (316) to pressurise a brake. An actuating unit (560) for moving the valve spool (520) comprises a series of pivoted links (542, 544, 546, 548) and an actuating shape memory alloy wire (562) connected to the first link (542) and to an actuating block (563) suspended from the third link (546). Application of electrical current to the wire (562) contracts it causing pivoting of the links and movement of the valve spool (520) to a second position in which the pressure port (316) is closed and the exhaust port (322) is open. The supply of pressuring fluid to the brake is thereby ceased, and fluid can be flowed from the brake via an inlet (320) and a bore (314) to the exhaust port (322) to release pressure from the brake. Removal of the electrical current from the wire (562) relaxes it and the bias spring (530) is able to restore the valve spool (520) to its first position.

## Description

The present invention relates to a valve, and to an anti-lock brake system incorporating the valve.

A shape memory alloy denotes an alloy that preserves a shape deformed by an external force below a critical temperature, whereas a shape memory effect of the alloy is activated for recovering a memorised original shape by a shape recovering force after being heated up to the critical temperature. Shape memory alloys such as a titanium-nickel alloy and an aluminum alloy are manufactured to have a predetermined shape at a high temperature.

There are methods for applying heat upon the shape memory alloys: one is to permit fluid to flow around the shape memory alloys to vary the temperature of the fluid, and another is to permit current to flow in the shape memory alloys to generate heat by an electrical resistance of the shape memory alloys.

A conventional valve utilising shape memory alloys subjects the shape memory alloys to heating by varying the temperature of a fluid flowing around the shape memory alloys. However, with such a valve it is difficult to accurately control the opening range of the valve which also has a slow response speed.

A valve for reducing these problems is disclosed in US Patent No. 5,211,371 (issued to Coffee). Shape memory alloys utilised in the valve of Coffee are in the shape of a wire which is electrically-controlled by an electric circuit. The electric circuit is a closed circuit comprising a plurality of transistors and a plurality of capacitors, so that the shape memory alloys are actuated in conformity with a cycle by using operations of charging/discharging the capacitors and switching the transistors.

In the valve of Coffee, however, the valve should be continuously in the open state for maintaining a prescribed pressure. Furthermore, the shape memory alloys should be continuously supplied with current to maintain the open state of the valve. In this case, not only the power is significantly dissipated due to the continuous supply of the current, but also the control of the opening/closing operation of the valve by using the current supply is difficult while the shape memory characteristic is likely to be lost.

US Patent No. 5,092,901 (issued to Hunter et al.) describes shape memory alloy fibres with very short total contraction and relaxation time suitable for being employed as an electro-magnetic actuator. However, Hunter et al. do not specifically disclose a valve utilising the shape memory alloy fibres.

On the other hand, as is widely known, an anti-lock brake system (ABS) indicates a brake system for preventing slipping along a road surface of wheels which are locked by the operation of the brake, and for improving a steering property. Especially, the anti-lock brake system affords an effective braking force and a steering capability in case of a sudden stop, braking on a curvy road, a wet road in the rain and an icy ground, and the like.

In the conventional anti-lock system, pressure-regulating valves of respective wheels are formed of two valves of a diaphragm pattern, ie, a pressure-holding valve and an exit valve. The pressure-holding valve and exit valve are controlled by two solenoid valves. In a normal braking operation, operation fluid flows to a brake cylinder via the pressure-regulating valves to realise the braking operation. Meantime, if one of the wheels is too abruptly locked, an electronic control unit (ECU) of the anti-lock brake system operates two solenoid valves to control the pressure within the brake cylinder and repeats locking and unlocking of the wheel at a very high speed, so that the slipping of the wheels is prevented while enhancing the steering capability.

However, the solenoid valves utilised for the anti-lock brake system have a complicated structure to require a demanding job in designing and manufacturing process with the consequence of high cost. In connection with the aforesaid valve that utilises the shape recovery force of the shape memory alloy attributed to the temperature variation of the fluid, the shape memory alloy having a slow response speed with respect to the fluid temperature cannot be employed for the anti-lock brake system which requires a high speed operation. Moreover, the above valve of Coffee has a difficulty in controlling the opening/ closing operation of the valve which is unsuitable for the anti-lock brake system. Further, even if the shape memory alloys of Hunter et al. having short contraction and relaxation time were employed in the anti-lock brake system, the continuous current supply as described above necessarily results in the risks of significant power dissipation and possible loss of shape memory characteristic.

According to a first aspect of the present invention there is provided a valve having a movable valve member for controlling a liquid or fluid path, said valve member being movable between first and second positions, and said valve comprising actuating means arranged to move said valve member to its first and to its second position, wherein said actuating means comprises a shape memory alloy member arranged to change shape or dimension upon the application of electrical current thereto whereby said valve member is moved.

Preferably the valve further comprises biasing means acting to maintain said valve member in its first position, and wherein the application of electrical current to said shape memory alloy member is arranged to cause said actuating means to move the valve member to its second position against the force of said biasing means.

According to a further aspect of the invention there is provided a valve comprising an electronic control unit for generating a control current, a housing having a bore with a first inlet therein, a valve member movable between a first position in which it closes the first inlet and a second position at which the first inlet is open, biasing means applying a biasing force to said valve member, and actuating means utilising shape memory alloy means for moving said valve member between its first and second positions by means of the control current supplied from said electronic control unit whereby the first bore is selectively opened and closed.

In an embodiment of a valve of the invention, said biasing means comprises a plate spring applying an upward biasing force to said valve member by a snap-through buckling to maintain said valve member in its first position, and wherein said plate spring is also arranged to applying a downward biasing force by the snap-through buckling to maintain said valve member in its second position.

The present invention also extends to a valve having first and second ports, and valve means for opening and closing said ports, the valve means being movable between a first position in which the first port is open and the second port is closed, and a second position in which the first port is closed and the second port is open, biasing means arranged to bias said valve means to its first position, and actuating means arranged to move said valve means to its second position against the action of said biasing means.

In one embodiment, said valve means comprises a single, reciprocable valve member, and wherein said actuating means utilises shape memory alloy means to move said valve means.

In an alternative embodiment, said valve means comprises a first valve member movable for controlling the opening and closing of said first port, and a second valve member movable for controlling the opening and closing of said second port, and said actuating means is common to both of said valve members, and wherein said actuating means utilises shape memory alloy means to move said valve means.

An embodiment of a valve of the present invention has the advantage that it is promptly operated, freely and accurately controlled in an open/close operation thereof, and has a simple structure to facilitate the designing and manufacturing thereof.

An embodiment of a valve of the present invention may be used in an anti-lock brake system which is capable of being promptly and accurately operated while having a simple structure.

A valve utilising shape memory alloys according to the present invention includes an electronic control unit for generating first control current. A housing of the valve has a first bore which includes a first inlet for introducing fluid from a fluid supply source and a first outlet for discharging the fluid to an operating object in an upper portion thereof, and a compartment is provided to a lower portion thereof. A first valve spool closes the first inlet at a first position, opens the first inlet at a second position thereof, and reciprocates between the first position and second position. A biasing unit applies a biasing force upon the first valve spool, and an actuating unit utilises shape memory alloy wires for moving the first valve spool from the first position of the first valve spool to the second position of the first valve spool or from the second position of the first valve spool to the first position of the first valve spool by means of the first control current supplied from the electronic control unit to open or close the first bore.

The biasing unit may be a plate spring which is installed to an inner sidewall of the compartment for exerting an upward biasing force by a snap-through buckling to maintain the first valve spool to the first position o the first valve spool when the valve spool is placed on the first position of the first valve spool, and applying a downward deflection force by the snap-through buckling to maintain the first valve spool to the second position of the first valve spool when the valve spool is placed on the second position of the first valve spool.

The actuating unit may comprise a first shape memory alloy wire, a lever, a second shape memory alloy wire and a restoring spring.

The first shape memory alloy wire is preferably electrically connected to the electronic control unit, of which one end is fixed to a lower surface of the plate spring and other end is fixed to a bottom surface of the compartment, and moves the first valve spool to the second position of the first valve spool to open the first inlet while overcoming the upward biasing force of the plate spring when the electronic control unit supplies the first control current thereto.

The second shape memory alloy wire is also preferably electrically connected to the electronic control unit, which has one end fixed to one end of the lever and the other end fixed to the bottom surface of the compartment, and pivots the lever when a second control current is supplied from the electronic control unit thereto.

In an embodiment, the lever is installed to the bottom surface of the compartment to be capable of pivoting about a shaft, the upper portion thereof contacts the plate spring when the valve spool is placed on the second position of the first valve spool. The lever applies a force to deform the plate spring to be bulgy upward while pivoting by the second shape memory alloy wire. Consequently, the first valve spool is moved to the first position of the first valve spool to close the first inlet.

The restoring spring may be installed between the lever and bottom surface of the compartment, and applies a restoring force to pivot the lever pivoted by the second shape memory alloy wire to return to the original position thereof when the supply of the second control current from the electronic control unit is intercepted.

Two valves utilising the shape memory alloys according to the present invention may be employed to provide the effect obtained by a 3-position 3-way valve. In addition, the valve has a simple structure, is easy to be manufactured, as well as economises manufacturing cost.

In an embodiment, the valve further comprises: a second bore having a second inlet for introducing the fluid from said operating object and a second outlet for discharging the fluid in the upper portion of said housing; a second valve spool for closing the second outlet on a first position, opening the second outlet on a second position, and reciprocating between the first position and second position of said second valve spool; a first rod connected to a bottom surface of said first valve spool; and a second rod connected to the bottom surface of said second valve spool.

For example, said biasing means may comprise: a first bias spring installed between said first rod and bottom surface of the compartment for applying the upward biasing force upon said first valve spool; a second bias spring installed between said second rod and bottom surface of the compartment for applying the upward biasing force upon said second valve spool; and a lever installed to be able to pivot about a shaft fixed to an inner sidewall of the compartment, and having one end connected to said first rod to pivot by means of a first pin and the other end connected to said second rod to pivot by means of a second pin.

Preferably, said actuating means comprises: a first shape memory alloy wire electrically connected to said electronic control unit, and having one end fixed to said first rod and the other end fixed to the bottom surface of the compartment for moving aid first valve spool to the second position of said first valve spool when said electronic control unit supplies the first control current thereto; and a second shape memory alloy wire electrically connected to said electronic control unit, and having one end fixed to said second rod and the other end fixed to the bottom surface of the compartment for moving said second valve spool to the second position of said second valve spool when the second control current is supplied from said electronic control unit thereto.

In an embodiment, said biasing means comprises: a first bias spring installed between said first rod and a ceiling of the compartment for applying the downward biasing force to maintain said first valve spool to the second position of said first valve spool; and a second bias spring installed between said second rod and ceiling of the compartment for applying the downward biasing force to maintain said second valve spool to the second position of said second valve spool.

Said driving means may comprise: a first ball formed on a lower surface of said first rod and a second ball formed on a lower surface of said second rod: a plate having an upper portion in contact with said first and second balls and guide pins at both front sides and both rear sides thereof to be inserted into guide grooves formed in inner sidewalls of the compartment; a roller contacting a lower surface of said plate and installed to be able to roll on the bottom surface of the compartment by means of a shaft for cooperating with said plate on a first position of said roller to move said second valve spool to the first position of said second valve spool while overcoming the downward biasing force of said second bias spring, and cooperating with said plate on a second position of said roller to move said first valve spool to the first position of said first valve spool while overcoming the downward biasing force of said first bias spring; a first shape memory alloy wire having one end connected to said shaft and the other end connected to another inner sidewall of the compartment and further electrically connected to said electronic control unit for moving said roller to the second position of said roller when the first control current is supplied from said electronic control unit thereto: and a restoring spring having one end fixed to said shaft and the other end fixed to the inner sidewall of the compartment in opposition to said first shape memory alloy wire for applying the restoring force to move said roller to the first portion of said roller when the supply of the first control current is ceased.

In one embodiment, said first and second valve spools and said first and second rods are an integrally-formed connecting rod.

Preferably, said connecting rod is disposed between the first and second bores to separate the first bore from the second bore, and further comprises an actuating body integrally formed with said connecting rod.

Preferably, said biasing means is a spring installed between the first outlet of the first bore and said actuating body for applying the biasing force to place said first and second valve spools on the second position.

In an embodiment, said actuating means comprises: a first link connected to said connecting rod by a first connecting pin via a path to communicate the upper portion of said housing with the compartment, and pivotally installed by a first shaft pin fixed to the path for pivoting about said first shaft pin to move said connecting rod; a second link pivotally connected to one end of said first link for pivoting about a second connecting pin; a third link pivotally connected to the other end of said first link in opposition to said second link for pivoting about a third connecting pin: a fourth link connected to a centre of said second link by a fourth connecting pin and connected to a centre of said third link by a fifth connecting pin, and having a centre capable of pivoting about a second shaft pin; an actuating block placed on a lower end of said third link and applying the upward force upon said third link; an actuating spring having one end fixed to a centre of said first link and the other end connected to said actuating block for applying the biasing force upon said actuating block; and a first shape memory alloy wire having one end fixed to the centre of said first link and the other end connected to said actuating block for contracting by heat when the first control current is supplied thereto to upwardly move said actuating block.

According to a further aspect of the present invention there is provided an anti-lock braking system for a vehicle comprising at least one supply pipe for supplying pressurised liquid or fluid to elements of the system, and comprising a valve as defined above to control the flow of pressurised liquid or fluid in said supply pipe.

The present invention also extends to an anti-lock braking system comprising a master cylinder for operating a vehicle brake, regulating means for controlling the pressure of brake fluid in said master cylinder, and valve means for controlling the flow of brake fluid in said braking system, the braking system further comprising sensor means for sensing parameters of the braking operation, and electronic control means responsive to said sensor means for generating control signals, wherein said valve means comprise shape memory alloys arranged to change shape or dimension upon the application of electrical current thereto such that said valve means are directly responsive to control signals generated by said electronic control means.

According to a further aspect of the present invention there is provided an anti-lock brake system comprising:
a master cylinder for generating fluid pressure for a wheel brake for a vehicle;
a pressure regulator for regulating the pressure of said master cylinder;
an accumulator linked to said regulator for storing fluid;
a wheel-speed sensor for sensing a wheel speed to generate a wheel-speed signal;
a vehicle speed sensor for sensing a vehicle speed to generate a vehicle-speed signal;
an electronic control unit for receiving the vehicle-speed signal and the wheel-speed signal, and generating electrical control currents in dependence upon the difference between the vehicle-speed signal and the wheel-speed signal;
and valve means for controlling the pressure of said wheel brake in response to said control currents, said valve means utilising a plurality of shape memory alloys.

In accordance with the invention there is provided an anti-lock brake system including a master cylinder for generating a hydraulic pressure to a wheel brake attached to a wheel of a vehicle. In addition, a hydraulic regulating part has a hydraulic pump for regulating the hydraulic pressure of the master cylinder and a hydraulic motor for driving the hydraulic pump. An accumulator linked to the hydraulic pump stores brake oil. Also, a wheel-speed sensor attached to the wheel senses a wheel speed to generate a wheel-speed signal, and a vehicle-speed sensor senses a vehicle speed to generate a vehicle-speed signal. An electronic control unit receives the vehicle-speed signal and wheel-speed signal, and calculates a difference between the vehicle-speed signal and wheel-speed signal to generate first control current, second control current, third control current, and fourth control current. Furthermore, the anti-lock brake system includes a first valve utilising a plurality of shape memory alloys for admitting the brake oil to press the wheel brake when the first control current is supplied, and intercepting the supply of the brake oil to the wheel brake when the second control current is supplied. A second valve discharges the brake oil from the wheel brake to the accumulator when the third control current is supplied from the electronic control unit so as to decrease pressure of the wheel brake, and blocks between the wheel brake and accumulator when the fourth control current is supplied so as to obstruct the flow of the brake oil from the wheel brake.

At this time, the first valve includes a first housing which has a first bore with a first inlet connected between the master cylinder and hydraulic pump and a first outlet connected to the wheel brake in the upper portion thereof, and a first compartment in the lower portion thereof. A first valve spool of the first valve closes the first inlet at the first position, and opens the first inlet at the second position. A first unit applies an upward biasing force by a snap-through buckling to maintain the first valve spool to the first position of the first valve spool when the first valve spool is placed on the first position of the first valve spool, and applies a downward biasing force by the snap-through buckling to maintain the first valve spool to the second position of the first valve spool when the first valve spool is placed on the second position of the first valve spool. A first shape memory alloy member moves the first valve spool to the second position while overcoming the upward biasing force of the first unit when the first control current is supplied from the electronic control unit. Besides, a second unit moves the first valve spool to the first position of the first valve spool while overcoming the downward biasing force of the first unit when the second control current is supplied from the electronic control unit.

In an embodiment, said first means includes a first plate spring which has sides being fixed at inner wall of the first compartment, an upper surface being fixed at a lower portion of said first rod.

Preferably, said second means comprises: a first lever pivotally installed on bottom surface of the first compartment by means of a first shaft for applying a force to said first plate spring in order to deform said first plate spring to be bulgy upward while overcoming the downward biasing force of said first plate spring when said first valve spool is at the second position of said first valve spool; a second shape memory alloy member for pivoting said first plate spring when the second control current is supplied; and a first spring being installed between said first lever and the bottom surface of the first compartment for applying a restoring force to said first lever pivoted by said second shape memory alloy member in order to return said first lever to original position when the second control current is intercepted from said electronic control unit.

Preferably, said first shape memory alloy member is a shape memory alloy wire of which one end is fixed on lower surface of said first plate spring, of which the other end is fixed on the bottom surface of the first compartment, which has a total contraction and relaxation time of below 100 milliseconds and generates a maximum tension of 5Kgf, wherein said second shape memory alloy member is a shape memory alloy wire of which one end is fixed at said first lever, of which the other end is fixed on the bottom surface of the first compartment, which has a total contraction and relaxation time of below 100 milliseconds and generates a maximum tension of 5Kgf.

The second valve includes a second housing which has a second bore with a second inlet connected between the first valve and wheel brake and a second outlet connected between the hydraulic pump and accumulator in the upper portion thereof, and a second compartment in the lower portion thereto. A second valve spool of the second valve closes the second outlet on the first position, and opens the second outlet on the second position. A third unit applies the upward biasing force by the snap-through buckling to maintain the second valve spool to the second position of the second valve spool when the second valve spool is placed on the second position of the second valve spool, and applies the downward biasing force by the snap-through buckling to maintain the second valve spool to the second position of the second valve spool when the second valve spool is placed on the second position of the second valve spool. A third shape memory alloy member moves the second valve spool to the second position of the second valve spool while overcoming the upward biasing force of the third unit when the third control current is supplied from the electronic control unit. Besides, a fourth unit moves the second valve spool to the first position of the second valve spool while overcoming the downward biasing force of the third unit when the fourth control current is supplied from the electronic control unit.

When the first and fourth control currents are supplied from the electronic control unit, the first valve spool opens the first inlet and the second valve spool closes the second outlet to press the wheel brake. Meantime, when the second and third control currents are supplied from the electronic control unit, the first valve spool closes the first inlet and the second valve spool opens the second outlet to decrease the wheel brake. On the other hand, if the second and fourth control currents are supplied from the electronic control unit, the first and second valve spools close the first inlet and second outlet to constantly maintain the pressure of the wheel brake.

An anti-lock brake system with a valve or valves utilising the shape memory alloys of embodiments of the present invention is simple in its structure, easy to be manufactured and low in price.

Preferably, said third means includes a second plate spring which has sides being fixed at inner wall of the second compartment, and an upper surface being fixed at a lower portion of said second rod.

In an embodiment, said fourth means comprises: a second lever pivotally installed on bottom surface of the second compartment by means of a second shaft for applying a force to said second plate spring in order to deform said second plate spring to be bulgy upward while overcoming the downward biasing force of said second plate spring when said second valve spool is at the second position of said second valve spool; a fourth shape memory alloy member for pivoting said second plate spring when the fourth control current is supplied; and a second spring being installed between said second lever and the bottom surface of the second compartment for applying a restoring force to said second lever pivoted by said fourth shape memory alloy member in order to return said second lever to original position when the fourth control current is blocked from said electronic control unit.

Preferably, said third shape memory alloy member is a shape memory alloy wire of which one end is fixed on the lower surface of said second plate spring, of which the other end is fixed on the bottom surface of the second compartment, which has a total contraction and relaxation time of below 100 milliseconds and generates a maximum tension of 5Kgf, said second shape memory alloy member is a shape memory alloy wire of which one end is fixed at said second lever, of which the other end if fixed on the bottom surface of the second compartment, which has a total contraction and relaxation time of below 100 milliseconds and generates a maximum tension of 5Kgf.

The present invention also extends to a valve (actuator) for performing pressurisation, decompression and pressure maintenance which drives plural spools movable up and down within a housing having plural bores by using linear shape memory alloys. An anti-lock brake system utilises the valve, in which respective bores have inlets and outlets. A mechanism for holding a lowering state of the spools is installed to the lower portion of the housing, and the spools return to their original positions by bias springs. A master cylinder, a wheel brake and a hydraulic pump are connected to the inlets and outlets of the valve of the anti-lock brake system and an electronic control unit is connected to the shape memory alloys to actuate the shape memory alloys, thereby attaining the operations of pressurisation, decompression and pressure maintenance in connection with a brake pressure of the wheel brake.

Embodiments of the present invention will hereinafter be described, by way of example, with reference to the accompanying drawings, in which:
Figure 1 is a schematic sectional view showing a substantially conventional valve utilising a shape memory alloy spring;
Figure 2 is a sectional view showing a valve of one embodiment of the present invention, in which an inlet of the valve is open;
Figure 3 is a sectional view showing the valve of Figure 2 with the inlet closed;
Figure 4 shows schematically a construction of an anti-lock brake system employing the valve of Figures 2 and 3:
Figure 5 is a sectional view showing a valve of a second embodiment of the present invention;
Figure 6 is a sectional view showing a valve of a third embodiment of the present invention:
Figure 7 is a sectional view showing the valve of a fourth embodiment of the present invention:
Figure 8 is a block diagram of an electronic control unit employed by a valve of the present invention; and
Figure 9 is a block diagram of a shape memory alloy driver of the control unit of Figure 8.

In the accompanying drawings, the same reference numerals are used to refer to the same or similar features.

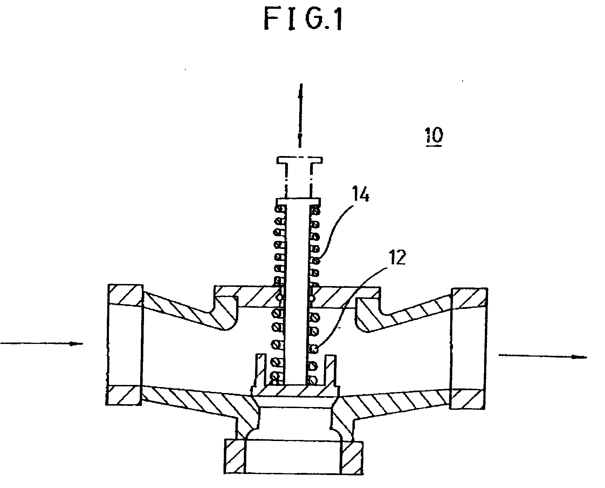

Figure 1 illustrates an example of a valve 10 for subjecting shape memory alloys to heating by varying the temperature of a fluid flowing around the shape memory alloys.

In Figure 1, a spring 12 is in the shape of a coil spring which is manufactured by using a shape memory alloy. The fluid flows around the spring 12. Once the temperature of the fluid has been raised to reach a critical temperature of the shape memory alloy which initiates the shape memory effect, the spring 12 is compressed by the shape recovery force to open the valve 10. Meanwhile, when the temperature of the fluid is lowered, the spring 12 is relaxed by a bias spring 14 to close the valve 10.

However, the substantially conventional valve 10 utilising the above-described shape memory alloy spring 12 has drawbacks. For example, it may be difficult to accurately control the opening range of the valve 10, and the spring 12 has a slow response speed with respect to the fluid temperature. Additionally, the valve 10 involves a fastidious manufacturing process since the shape memory alloys must be shaped as the coil.

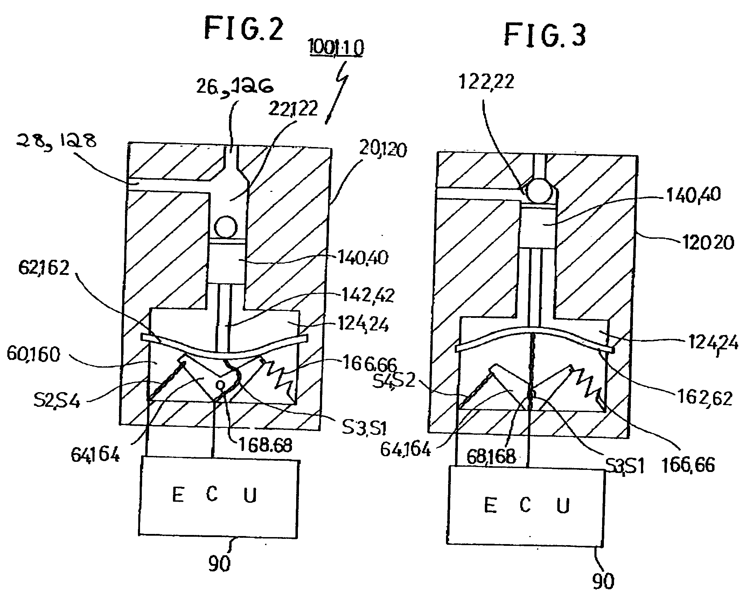

Figures 2 and 3 illustrate a valve 100 utilising shape memory alloys, in which Figure 2 shows the open state of the valve 100, and Figure 3 shows the closed state of the valve 100.

A bore 22 having an inlet 26 for the introduction of fluid from a fluid supply source (not shown) and an outlet 28 for the discharge of the fluid is formed in the upper portion of a housing 20. A compartment 24 is provided in the lower portion of the housing 20.

A valve spool 40 is installed to be movable in the up and down direction within the bore 22. The upper end of the valve spool 40 closes inlet 26 at the raised position, ie, at a first, closed, position as is shown in Figure 3, whilst the inlet 26 is open at the lowered position of the valve spool 40, ie, at a second, open, position thereof as is shown in Figure 2. A rod 42 is coupled to the lower end of the valve spool 40.

A plate spring 62 for maintaining the valve spool 40 in the first or the second position is installed within the compartment 24 of housing 20 in the transverse direction. Both ends of the plate spring 62 are fixed to the inner sidewall of the compartment 24 to be bulgy downward or upward for originating a snap-through buckling in the vertical direction. The rod 42 of the valve spool 40 is fixed to the central upper surface of the plate spring 62. When the plate spring 62 is deformed to be bulgy upward by the snap-through buckling, the valve spool 40 is placed in the first position to close the inlet 26, and the plate spring 62 applies an upward biasing force upon the valve spool 40 to urge the valve spool 40 into its first position. When the plate spring 62 is deformed to be bulgy downward, the valve spool 40 is placed on its second position opening the inlet 26, and the plate spring 62 applies a downward biasing force upon the valve spool 40 to urge the valve spool 40 into its second position.

A first shape memory alloy member S1 for downwardly deforming the plate spring 62 when it is already upwardly bowed to thereby move the valve spool 40 to its second, open, position is installed between the plate spring 62 and the bottom surface of the compartment 24. One end of the first shape memory alloy member S1 is fixed to the central bottom surface of the plate spring 62, and the other end thereof is fixed to the bottom surface of the compartment 24 and is electrically connected to an electronic control unit 90. When current supplied from the electronic control unit 90 flows through the first shape memory alloy member S1, heat is generated in the first shape memory alloy member S1 to contract it. The contraction of the first shape memory alloy member S1 causes the plate spring 62 to be deformed to be downwardly bowed and the valve spool 40 is thereby moved to its second position in which the inlet 26 is open.

A lifting part 60 is installed between the plate spring 62 and the bottom plane of the compartment 24. This lifting part 60 moves the valve spool 40 to its first position when the plate spring 62 is downwardly bowed, ie, causes the valve spool 40 to be moved from its second position to its first, closed, position. The lifting part 60 comprises a V-shaped lever 64 for applying a force to deform the plate spring 62 to bow upwardly, a second shape memory alloy member S2 for returning the lever 64, and a first spring 66 for pivoting the lever 64 when it has been pivoted by the second shape memory alloy member S2 to the original position thereof.

As illustrated in Figures 2 and 3, the lever 64 is substantially in the shape of a "V", and is installed to the central bottom of the compartment 24 to be able to pivot about a first shaft pin 68. Both ends of the lever 64 contact the lower surface of the plate spring 62 when the plate spring 62 is bowed downwardly, ie, when the valve spool 40 is placed in its second position.

The second shape memory alloy member S2 is installed between one end of the lever 64 and the bottom surface of the compartment 24. Once current from the electronic control unit 90 flows through the second shape memory alloy member S2 it is heated thereby and contracted by the heat generated. Therefore, the plate spring 62 is deformed to bow upwardly by pivoting of the lever 64 counter-clockwise caused by the contraction of the second shape memory alloy member S2.

The first spring 66 is installed between the other end of the lever 64 and the bottom surface of the compartment 24. Lever 64, having been pivoted by the second shape memory alloy member S2 is pivoted clockwise by the first spring 66 to return to its original position.

The operation of the valve 100 illustrated in Figures 2 and 3 will now be described.

As is shown in Figure 3, when the valve spool 40 is placed in its first position in which it closes the inlet 26, the electronic control unit 90 generates a first control current which then flows through, and heats, the first shape memory alloy member S1. As it is heated, the first shape memory alloy member S1 contracts and thereby causes deformation of the plate spring 62 such that it becomes downwardly bowed. Consequently, and as is shown in Figure 2, the valve spool 40 is moved to its second position in which the inlet 26 is open.

At this time, fluid is introduced into the bore 22 via the inlet 26 and discharged through the outlet 28. Therefore, a pressure at the outlet side of the valve 100 is increased (ON).

With the valve spool 40 in its second position as is shown in Figure 2, the electronic control unit 90 generates a second control current. The second control current flows through, and heats, the second shape memory alloy member S2 of the lifting part 60, whereby the second shape memory alloy member S2 contracts to cause the lever 64 to pivot counter-clockwise. By pivoting counter-clockwise, the lever 64 contacts the bottom surface of the plate spring 62 and urges the plate spring 62 upwardly. By this, the plate spring 62 is deformed to bowed upwardly again. Accordingly, the valve spool 40 is again moved to its first position and, as is shown in Figure 3, the inlet 26 of the valve 100 is closed to block the flow of the fluid (OFF).

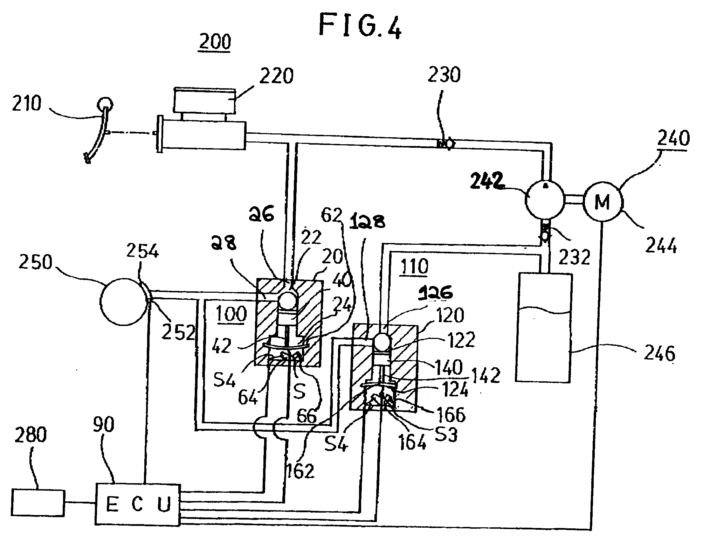

Figure 4 shows schematically an anti-lock brake system 200 employing a first valve 100 and a second valve 110 each as illustrated and operable as shown in Figures 2 and 3. The structure and operation of the first valve 100 and of the second valve 110 in the system 200 are the same as each other. In this respect, in the following description of Figure 4, every element of the first valve 100 is affixed with "first" except for the second shape memory alloy member S2. For example, the housing of the first valve 100 is referred to as the first housing 20. Similarly, every element of the second valve 110 is referred to as "second" such that its housing is a second housing 120, its compartment is a second compartment 124, its bore is a second bore 122, its inlet is a second inlet 126, its outlet is a second outlet 128, its valve spool is a second valve spool 140, its rod is a second rod 142, its plate spring is a second plate spring 162, its lever is a second lever 164, and its first spring is a second spring 166. In addition, its shape memory alloy member fixed to the second plate spring 162 is a third shape memory alloy member S3, it shape memory alloy member fixed to the lever 164 is a fourth shape memory alloy member S4, and the spring for elastically supporting the lever 164 is a second spring 166.

In order to incorporate the valves 100, 110 in an anti-lock brake system, the overall contraction and relaxation times of the shape memory alloy members should be 100 milliseconds (ms) or less, and preferably of several tens of hundreds of ms. Also, it should apply a maximum tensile force of the order of 5Kgf. For instance, the shape memory alloys disclosed in the above-mentioned US Patent No. 5,092,901 may be utilised. To satisfy the required characteristics for the shape memory alloy members, ie, to satisfy 100ms and 5Kgf, each shape memory alloy member may be formed as an individual or a bundle of commercially available shape memory alloy fibres, for example.

In the anti lock braking system 200 of Figure 4, one side of a master cylinder 220 is linked to a brake pedal 210. When a driver steps on the brake pedal 210, the master cylinder 220 provides hydraulic pressure to a wheel brake 254 attached to a wheel 250 of a vehicle.

A hydraulic regulator 240 has a hydraulic pump 242 for regulating the hydraulic pressure of the master cylinder 220 and a hydraulic motor 244 for driving hydraulic pump 242. The hydraulic pump 242 of the hydraulic regulator 240 is connected to the master cylinder 220 via a first check valve 230. The hydraulic motor 244 regulates the hydraulic pressure to be constant and is automatically stopped when the pressure exceeds a predetermined value.

An accumulator 246 for storing brake oil is connected to the hydraulic pump 242 of the hydraulic regulator 240 by way of a second check valve 232.

The first and second valves 100 and 110 are used as an actuator in the system 200. The first valve 100 is used as a pressure valve, and the second valve 110 is as an exhausting valve. The first inlet 26 of the first valve 100 is connected between the master cylinder 220 and the first check valve 230. The first outlet 28 is connected to the wheel brake 254. The second outlet 128 of the second valve 110 is connected between the wheel brake 254 and the first outlet 28 of the first valve 100. The second inlet 126 is linked between the second check valve 232 and accumulator 246.

A wheel-speed sensor 252 is attached to the wheel 250 to sense the speed of the wheel 250, thereby generating a wheel-speed signal. A vehicle-speed sensor 280 detects the speed of the vehicle to generate a vehicle-speed signal.

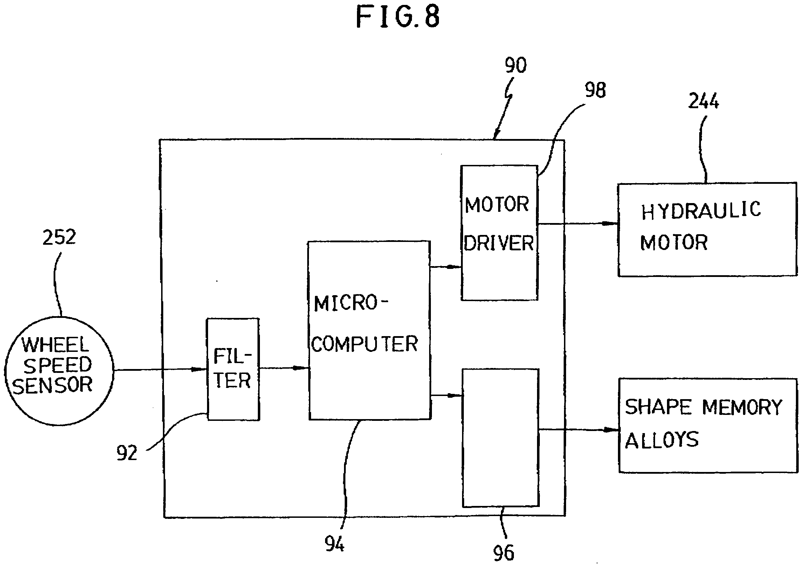

The electronic control unit 90 for controlling the first and second valves 100 and 110 and the hydraulic regulator 240, as illustrated in Figure 8, includes a filter 92, a microcomputer 94, a shape memory alloy driver 96 for actuating first and second shape memory alloy members S1 and S2 of first valve 100 and third and fourth shape memory alloy members S3 and S4 of second valve 110, and a motor driver 98 for driving hydraulic motor 244. The electronic control unit 90 is electrically-connected to the wheel-speed sensor 252, the vehicle-speed sensor 280, the first and second valves 100 and 110, and the hydraulic motor 244.

The filter 92 receives the wheel-speed signal from the wheel-speed sensor 252, and the filtered output signal is then input to the microcomputer 94.

The microcomputer 94 calculates a difference (%) between the received vehicle-speed signal and the wheel-speed signal. When this speed difference is zero, it means that the wheel 250 is in a locked state. The locking of wheel 250 adversely affects the braking distance and steering of the vehicle. Thus, it is required to lower the pressure of wheel brake 254 to unlock the wheel 250. In this case, the hydraulic pressure of the wheel brake 254 should be reduced to release the wheel 250. If the speed difference calculated by the microcomputer 94 is 100 this means that the wheel brake 254 is not operated. In this case, the hydraulic pressure of the wheel brake 254 is necessarily increased to decelerate the speed of the wheel 250.

If the speed difference is greater than zero but smaller than 100, the difference means that the wheel is in an unlocked state even though the wheel brake 254 is being operated. In this case, the speed difference is compared with a predetermined value, for example, 10%. Then, if the speed difference is larger than the predetermined value, the wheel brake 254 is pressed to decelerate the speed of the wheel 250; whereas, if the speed difference is smaller than the predetermined value, the hydraulic pressure of the wheel brake 254 is lowered to accelerate the speed of the wheel 250. If the speed difference equals the predetermined value, the hydraulic pressure of wheel brake 254 is maintained constant.

When the speed difference is larger than the predetermined value, the microcomputer 94 generates a pressing signal for pressing the wheel brake 254. The pressing signal generates the first current control signal for controlling the intensity of current supplied to the first shape alloy member S1 of the first valve 100 and the fourth shape memory alloy member S4 of the second valve 110, and a first timing signal for controlling the time taken for the current to be supplied to the first shape memory alloy member S1 and the fourth shape memory alloy member S4.

When the speed difference is smaller than the predetermined value, the microcomputer 94 generates an exhausting signal for exhausting the wheel brake 254. The exhausting signal generates a second current control signal for controlling the intensity of the current supplied to the second shape memory alloy member S2 of the first valve 100 and the third shape memory alloy member S3 of the second valve 110, and a second timing signal for controlling the time taken for the current to be supplied to the second shape memory alloy member S2 and to the third shape memory alloy member S3.

When the speed difference equals the predetermined value, the microcomputer 94 generates a maintaining signal for constantly maintaining the oil pressure of the wheel brake 254. The maintaining signal includes a third current control signal for controlling the intensity of the current supplied to the second shape memory alloy member S2 of the first valve 100 and the fourth shape memory alloy member S4 of the second valve 110, and a third timing signal for controlling the time taken for the current to be supplied to the second shape memory alloy member S2 and the fourth shape memory alloy member S4.

In addition, the microcomputer 94 generates an oil-pressure control signal for controlling the hydraulic motor 244 which drives the hydraulic pump 242. The above-described first, second and third current control signals and first, second and third timing signals are transmitted to the shape memory alloy driver 96.

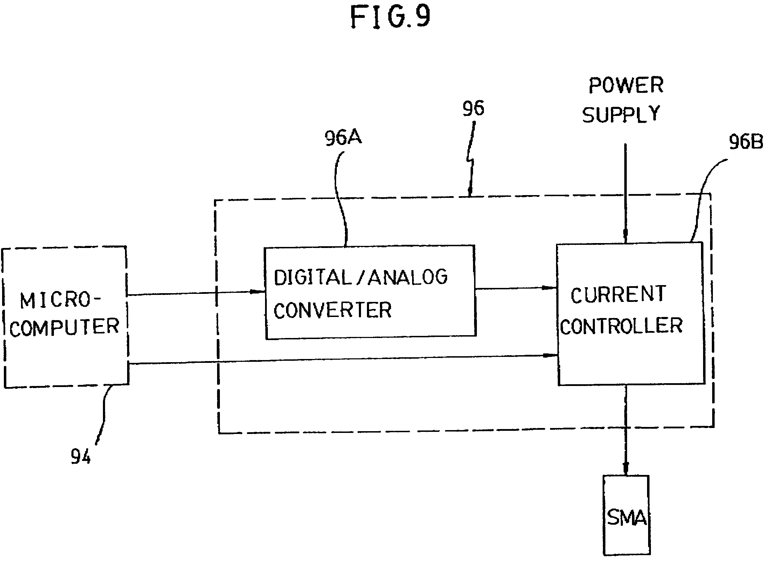

As is illustrated in Figure 9, the shape memory alloy driver 96 has a digital/analog converter (hereinafter referred to as a D/A converter) 96A and a current controller 96B.

D/A converter 96A receives the first, second and third current control signals from the microcomputer 94 and converts the received signals to analog signals.

The current controller 96B, supplied with power from a power supply apparatus (not shown, receives the first current control signal and the first timing signal and generates a first control current which is supplied to the first shape memory alloy member S1, and a fourth control current which is supplied to the fourth shape memory alloy member S4. In addition, the current controller 96B receives the second current control signal and the second timing signal and generates a second control current which is supplied to the second shape memory alloy member S2 and a third control current which is supplied to the third shape memory alloy member S3. The current controller 96B also receives the third current control signal and the third timing signal and generates the second control current which is supplied to the second shape memory alloy member S2 and the fourth control current which is supplied to the fourth shape memory alloy member S4.

The motor driver 98 activates the hydraulic motor 244 in accordance with the oil-pressure control signal from the microcomputer 94. When the pressure within the anti-lock brake system comes down to the predetermined pressure or below, the hydraulic motor 244 is driven again by the motor driver 98.

The operation of the anti-lock brake system 200 employing the first and second valves 100 and 110 will now be described.

When a driver suddenly steps on the brake pedal 210 to immediately decelerate and/or stop the vehicle, oil pressure is generated in the master cylinder 220. At this time, the wheel brake 254 is locked to abruptly decelerate the wheel 254, thereby operating the anti-lock brake system 200 which then repeats the pressing, exhausting and pressure-maintaining operations irregularly altered in accordance with circumstance.

When the difference between the vehicle speed and the wheel speed is larger than the predetermined value, the microcomputer 94 of the electronic control unit 90 produces the pressing signal for the pressing wheel brake 254. The first current control signal and the first timing signal are transmitted to the current controller 96B by means of the pressing signal. The current controller 96B supplies the first control current to the first shape memory alloy member S1 of the first valve 100, and the fourth control current to the fourth shape memory alloy member S4 of the second valve 110 in accordance with the received first current control signal and first timing signal.

Upon the supply of the first control current to the first shape memory alloy member S1, the first valve spool 40 is moved to its second position to open the first inlet 26. The supply of the fourth control current to the fourth shape memory alloy member S4 of the second valve 110 moves the second valve spool 140 to its first position to close the second inlet 126. Consequently, the brake oil flows toward first outlet 28 by way of the first inlet 26 and the first bore 22 of the first valve 100 to increase the pressure of the wheel brake 254 (pressing). Accordingly, wheel brake 254 is operated to decelerate the relative speed of wheel 250 with respect to the vehicle speed.

When the difference between the vehicle speed and the wheel speed is smaller than the predetermined value, the microcomputer 94 of the electronic control unit 90 produces the exhausting signal for exhausting the wheel brake 254. The second current control signal and the second timing signal are transmitted to the current controller 96B by means of the exhausting signal. The current controller 96B supplies the second control current to the second shape memory alloy member S2 of the first valve 100, and the third control current to the third shape memory alloy member S3 of second valve 110 in accordance with the received second current control signal and the second timing signal.

Upon the supply of the second control current to the second shape memory alloy member S2 of the first valve 100, the first valve spool 40 is moved to its first position to close the first inlet 26. The supply of the third control current to the third shape memory alloy member S3 moves the second valve spool 140 to its second position to open the second inlet 126. Consequently, brake oil flows to the accumulator 246 through a brake oil passage comprised of second outlet 128, second bore 122 and second inlet 126 of the second valve 110 to decrease the pressure of the wheel brake 254 (exhausting). Accordingly, the speed of the wheel 250 becomes fast relative to the vehicle speed.

When the difference between the vehicle speed and the wheel speed equals the predetermined valve, the microcomputer 94 of electronic control unit 90 generates the maintaining signal for maintaining the hydraulic pressure of the wheel brake 254. The third current control signal and the third timing signal are transmitted to the current controller 96B by means of the maintaining signal. The current controller 96B supplies the second control current to the second shape memory alloy member S2 of the first valve 100, and the fourth control current to the fourth shape memory alloy member S4 of the second valve 110 in accordance with the received third current control signal and the third timing signal.

Upon the supply of the second control current to the second shape memory alloy member S2, the first valve spool 40 moves to its first position so as to close the first inlet 26. The supply of the fourth control current to the fourth shape memory alloy member S4 moves the second valve spool 140 to its first position closing the second inlet 126. Consequently, the brake oil passage towards the accumulator 246 is blocked to constantly maintain the pressure of the wheel brake 254.

In the sequence of above-described steps, the pressing, exhausting and pressure maintaining operations of the wheel brake 254 are repeated to thus decelerate the speed of the vehicle.

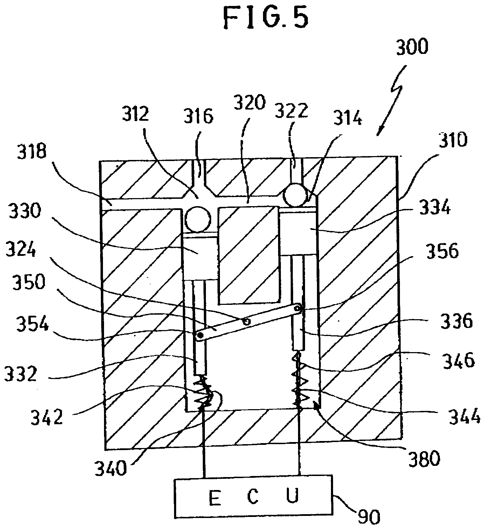

Figure 5 illustrates an alternative embodiment of a valve 300 utilising shape memory alloys.

In Figure 5, a pressing bore 312 having a pressing inlet 316 for introducing fluid from a fluid supply source (not shown) and a pressing outlet 318 for discharging the fluid to an operating object (not shown), and an exhaust bore 314 having an exhausting inlet 320 for introducing the fluid from the operating object and an exhausting outlet 322 for discharging the fluid are formed in the upper portion a housing 310. A compartment 324 is provided in the lower portion of the housing 310. The exhausting inlet 320 allows the pressing bore 312 to communicate with the exhaust bore 314.

A pressing valve spool 330 is mounted within the pressing bore 312 to be movable in the up and down direction. The upper end of the pressing valve spool 330 closes the pressing inlet 316 at the raised position, ie, at a first position, while the pressing inlet 318 is open at the lowered position, ie, at a second position. A pressing rod 332 is coupled to the lower end of the pressing valve spool 312. An exhausting valve spool 334 is mounted within the exhaust bore 314 to be movable in the up and down direction. The upper end of the exhausting valve spool 334 closes the exhausting outlet 322 at the ascending position, ie, at a first position, while exhausting outlet 322 is open at the lowered position, ie, at a second position. An exhausting rod 336 is coupled to the lower end of the exhausting valve spool 334.

A first actuating part 380, actuated by shape memory alloys controlled by pressing current and exhausting current generated by the electronic control unit 90, is installed within the compartment 324 of housing 310 for alternately operating the pressing valve spool 330 and the exhausting valve spool 334. The first actuating part 380 causes the exhausting valve spool 334 to move to its first position when the pressing valve spool 330 is placed in its second position, ie, when the pressing inlet 316 is open; and it causes the exhausting valve spool 334 to move to its second position when the pressing valve spool 330 is placed in its first position, ie, when the pressing inlet 316 is closed.

The first actuating part 380 includes a lever 350 having its two ends respectively coupled to the pressing rod 332 and to the exhausting rod 336 for alternately moving the valve spools 330 and 334 to their corresponding first and second positions. In addition to lever 350, a first bias spring 342 acts to apply an upward biasing force to the pressing valve spool 330, and a second bias spring 346 applies an upward biasing force to the exhausting valve spool 334. In addition, the first actuating part 380 has a first pressing shape memory alloy wire 340 for moving the pressing valve spool 330 to its second position whilst overcoming the upward biasing force of the first bias spring 342, and a second exhausting shape memory alloy wire 344 for moving the exhausting valve spool 334 to its second position whilst overcoming the upward biasing force of the second bias spring 346.

The lever 350 is installed to pivot about a shaft 352 embedded into the inner sidewall of the compartment 324, and each end of the lever is joined to the respective one of the pressing rod 324 and the exhausting rod 336 by means of pins 354 and 356 to enable valve spools 330 and 334 to be alternately moved up and down.

One end of first bias spring 342 is fixed to the end of the pressing rod 332, and other end thereof is fixed to the bottom surface of the compartment 324 to apply the upward biasing force to the pressing rod 332, so that the first bias spring 342 maintains the pressing valve spool 330 in its first position. One end of the second bias spring 344 is fixed to the end of the exhausting rod 336, and the other end thereof is fixed to the bottom surface of the compartment 324 to apply the upward biasing force upon the exhausting rod 336 so as to maintain the exhausting valve spool 334 in its first position.

The pressing and exhausting shape memory alloy wires 340 and 344 are preferably linearly shaped. One end of each is connected to a respective end of the pressing rod and of the exhausting rod 332 and 336, and the other end of each is fixed to the bottom surface of the compartment 324. The pressing shape memory alloy wire 340 is contracted by receiving the pressing current from the electronic control unit 90 so that pressing valve spool 330 may move from its first position to its second position. The exhausting shape memory alloy wire 344 is contracted by receiving the exhausting current from the electronic control unit 90 so that the exhausting valve spool 334 may move from the first position to the second position thereof.

The opening/closing operations of the valve 300 will now be described.

In performing the pressing operation, when the pressing current is supplied from the electronic control unit 90 to the pressing shape memory alloy wire 340, heat is generated and the pressing shape memory alloy wire 340 is contracted. As the pressing shape memory alloy wire 340 contracts it overcomes the upward biasing force of the first bias spring 343 whereby the pressing rod 332 is lowered. The pressing valve spool 330 is thereby lowered to its second position opening the pressing inlet 316. Simultaneously, the lever 350 pivots counter-clockwise, and the exhausting valve spool 334 moves to its first position by the biasing force of the second spring 346 fixed to one end of exhausting rod 336, thereby closing the exhausting outlet 322. As a result, the fluid flows through a passage consisting of the pressing inlet 316, the pressing bore 312 and the pressing outlet 318 to increase the pressure of the pressing outlet side.

In performing the exhausting operation, the pressing current supplied to the pressing shape memory alloy wire 340 is blocked, and the exhausting current is supplied from the electronic control unit 90 to the exhausting shape memory alloy wire 344. The exhausting shape memory alloy wire 344 is heated and contracts, whilst the pressing shape memory alloy wire 340 relaxes. The exhausting shape memory alloy wire 344 contracts while overcoming the upward biasing force of the second bias spring 346 to lower the exhausting valve spool 334 to the second position thereof. At the same time, the lever 350 pivots clockwise, pressing valve spool 330 moves to its first position by means of the first bias spring 342, exhausting outlet 322 is open, and exhausting inlet 316 is closed. As a result, fluid flows through a passage consisting of the pressing outlet 318, the pressing bore 312, the exhausting inlet 320, the exhaust bore 314 and the exhausting outlet 322, thereby decreasing the pressure at the pressing outlet side.

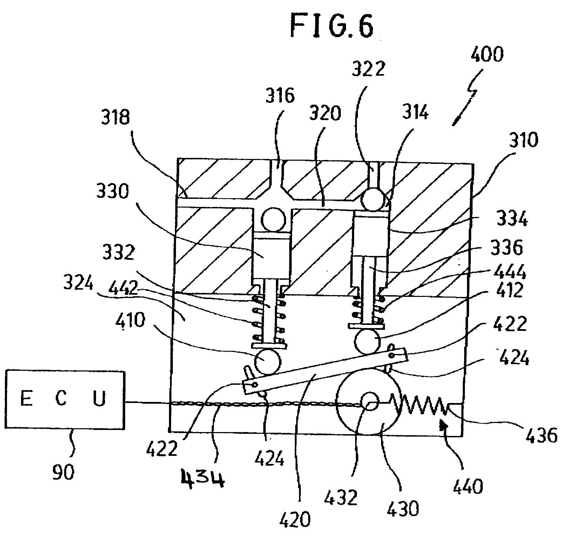

Figure 6 illustrates a further embodiment of a valve 400 utilising shape memory alloys.

In Figure 6, a housing 310 is the same as that of the valve 300 except that guide grooves 424 are formed in the inner sidewall of the compartment 324.

Additionally, pressing valve spool 330, pressing rod 332, exhausting valve spool 334 and exhausting rod 336 of valve 400 are the same as the pressing valve spool 330, the pressing rod 332, the exhausting valve spool 334 and the exhausting rod 336 of the valve 300. Balls 410 and 412 performing a sliding movement are fixed to the lower ends of the pressing rod 332, linked to pressing valve spool 330, and of the exhausting rod 336, linked to exhausting valve spool 334.

A pressing bias spring 442 for applying a downward biasing force to urge the pressing valve spool 330 to its second position is installed between the pressing rod 332 and the top of the compartment 324. An exhausting bias spring 444 for exerting the downward biasing force to urge the exhausting valve spool 334 to its second position is installed between the exhausting rod 336 and the top of the compartment 324.

A second actuating part 440 actuated by the shape memory alloys is installed within the compartment 324 of the housing 310 for alternately moving the pressing valve spool 330 and the exhausting valve spool 334 to their respective first and second positions.

A plate 420 of the second actuating part 440 alternately moves the pressing valve spool 330 and the exhausting valve spool 334 to their respective first positions while the upper surface of the plate 420 contacts balls 410 and 412. Four guide pins 422 formed on both sides of the plate 420 are inserted into guide grooves 424 in both sides of the inner wall of the compartment 324 of the housing 310, and the lower surface of the plate 420 is in contact with a roller 430 to permit rolling motion. The guide pins 422 are moved along the guide grooves 424 by the rolling of roller 430, so that the plate 420 executes a seesaw motion.

The roller 430 of the second actuating part 440, installed below the plate 420 in a first position to move the exhausting valve spool 334 to its first position whilst overcoming the downward biasing force of the exhausting bias spring 444. In a second position, the roller 430 cooperates with the plate 420 to move the pressing valve spool 330 to its first position while overcoming the downward biasing force of the pressing bias spring 442.

The roller 430 is rotatably mounted about a shaft 432. An actuating shape memory alloy wire 434, arranged to be contracted by the current from the electronic control unit 90, and a restoring spring 436 for biasing the roller 430 to its first position, are linked to the shaft 432. One end of the actuating shape memory alloy wire 434 is fixed to the inner side wall of the compartment 324, and then electrically connected to the electronic control unit 90.

When current is supplied from the electronic control unit 90 to the actuating shape memory alloy wire 434 to contract it, the roller 430 rolls to its second position against the biasing force of the restoring spring 436. In its second position, the roller 430 cooperates with the plate 420 to move the exhausting valve spool 334 to its second position and to move the pressing valve spool 330 to its first position so that the exhausting outlet 322 is open and the pressing inlet 316 is closed.

If the current supply from the electronic control unit 90 to the actuating shape memory alloy wire 434 ceases, the actuating shape memory alloy wire 434 relaxes and the roller 430 rolls to its first position by the restoring force of the restoring spring 436. The roller 430 moves to its first position and cooperates with the plate 420 to move the exhausting valve spool 334 to its first position and to move the pressing valve spool 330 to its second position whereby the exhausting outlet 322 is closed and the pressing inlet 316 is open.

The operation of the valve 400 shown in Figure 6 will now be described.

Figure 6 illustrates the pressing state of the valve 400. In Figure 6, no current is applied from the electronic control unit 90 to the actuating shape memory alloy wire 434. If current is then supplied, the actuating shape memory alloy wire 434 contracts moving the roller 430 against the force of restoring spring 436 to its second position. This, by a seesaw motion of the plate 420, moves the pressing valve spool 330 to its first position against the downward biasing force of the pressing bias spring 442 of the pressing rod 332. The exhausting valve spool 334 is moved to its second position by the downward biasing force of the exhausting bias spring 444. As a result, the pressing inlet 316 is closed and the exhausting outlet 322 is open to the flow of fluid through the passage consisting of pressing outlet 318, pressing bore 312, exhausting inlet 320 exhaust bore 314 and exhausting outlet 322, thereby decreasing the pressure of the pressing outlet side (exhausting).

In order to increase the pressure of the pressing outlet side, the electronic control unit 90 stops the current supply to the actuating shape memory alloy wire 434. The actuating shape memory alloy wire 434 thus relaxes and the roller 430 returns to its first position by the restoring force of the restoring spring 436. Consequently, and as shown in Figure 6, the pressing inlet 316 is open, and the exhausting outlet 322 is closed to flow of fluid through the passage consisting of pressing inlet 316, pressing bore 312 and pressing outlet 318, thereby increasing the pressure of the pressing outlet side (pressing).

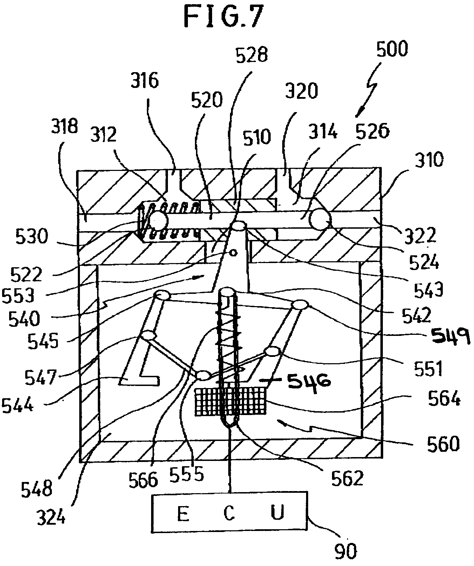

Figure 7 shows a sectional view of a further embodiment of a valve 500 utilising shape memory alloys.

As illustrated in Figure 7, a pressing bore 312 and an exhausting bore 314 are formed in the upper portion of a housing 310. The pressing bore 312 has a pressing inlet 316 for introducing fluid from a fluid supply source (not shown) and a pressing outlet 318 for discharging the fluid to an operating object (not shown). The exhausting bore 314 has an exhausting inlet 320 for introducing the fluid from the operating object and an exhausting outlet 322 for discharging the fluid. A compartment 324 is provided in a lower portion of the housing 310. A path 510 connected to the compartment 324 is formed between the pressing bore 312 and the exhausting bore 314.

An integrally-formed valve spool 520 is installed to be movable, laterally as shown in Figure 7, within the pressing bore 31 and the exhausting bore 314. Valve spool 520 includes a first spherical part 522 for opening the pressing inlet 316 in its first position, and a second spherical part 524 for closing the exhausting outlet 322 in its first position. A connecting rod 526 connects the first and second spherical parts 522 and 524. The valve spool 520 also comprises an actuating body 528 for separating the pressing bore 312 from the exhausting bore 314.

A third bias spring 530 is installed between the pressing bore 312 and the actuating body 528 for maintaining the valve spool 520 in a second position thereof.

A linkage part 540 is installed within the compartment 324 for moving the valve spool 520 from its second position to its first position as illustrated.

The linkage part 540 comprises a first link 542 connected to the connecting rod 526 of the valve spool 520 by means of a first connecting pin 543 and pivotable about a first shaft pin 553 which penetrates the path 528. A second link 544 is connected to one end of the first link 542 by a second connecting pin 545, and a third link 546, to act in opposition to the second link 544, is connected to the other end of the first link 542 by a third connecting pin 549. A fourth link 548 has one end connected to the second link 544 by a fourth connecting pin 547 and its other end connected to the third link 546 by a fifth connecting pin 552. The fourth link 548 is pivotable about a second shaft pin 555. As shown in Figure 7, the second and third links 544 and 546 are each substantially L-shaped.

An actuating part 560 for actuating the linkage part 540 is installed by means of the shape memory alloys for receiving the current supplied from electronic control unit 90. The actuating part 560 comprises an actuating block 564 installed at the lower surface of the third link 546 of linkage part 540 and is arranged to apply a force capable of overcoming the biasing force of the third bias spring 530 to the linkage part 540. Furthermore, an actuating shape memory alloy wire 562 has one end fixed to the centre of the first link 542 and the other end connected to the actuating block 563. The actuating shape memory alloy wire 562 is arranged to contract when current is supplied thereto from the electronic control unit 90. An actuating spring 566 has one end fixed to the centre of the first link 542 and other end fixed to the actuating block 564 for applying the downward biasing force.

Actuating block 564 is suspended from the lower surface of the third link 546 by means of the actuating spring 566 and the actuating shape memory alloy wire 562. When current is supplied from the electronic control unit 90 to the actuating shape memory alloy wire 562, the actuating shape memory alloy wire 562 contracts and thus elevates the actuating spring 566. When the current supply from electronic control unit 90 is ceased, the actuating shape memory alloy wire 562 relaxes and the actuating block 564 is lowered by the actuating spring 566.

The pressing and exhausting operations of the valve 500 will now be described.

Figure 7 illustrates the valve 500 in the pressing state. As can be seen in Figure 7, when performing the pressing operation, the current supply to the actuating shape memory alloy wire 562 is ceased, the valve spool 520 is placed in its first position by the biasing force of the third bias spring 530. In this position, the first spherical part 522 opens the pressing inlet 316, whilst the second spherical part 524 closes the exhausting outlet 322. As a result, fluid flows from the fluid supply source through a passage consisting of pressing inlet 316, pressing bore 312 and pressing outlet 318 to increase the pressure of the operating body connected to the pressing outlet 318 (pressing).

For exhausting, the electronic control unit 90 supplies current to the actuating shape memory alloy wire 562 which, in turn, is contracted by heat. The contraction of the actuating shape memory alloy wire 562 elevates the actuating block 564 while overcoming the biasing force of the actuating spring 566. The third link 546 in contact with the actuating block 564 is raised by the elevation of the actuating block 564.

At this time, the left of the fourth link 548 pivots counter-clockwise and the right thereof pivots clockwise about the second shaft pin 555 to enlarge the interval between the second link 544 and the third link 546. By the elevation of the actuating block 564, one end of the first link 542 connected to the third link 546 by means of second connecting pin 549 is raised. Once the second connecting pin 549 of the first link 542 rises, the first link 542 is pivoted counter-clockwise about the first shaft pin 553. Consequently, the valve spool 520, which is connected to the first link 542, moves to its second position against the biasing force of the third bias spring 530. Accordingly, the exhausting outlet 322 is opened and the pressing inlet 316 is closed, so that fluid flows through a passage consisting of the operating object, exhausting inlet 320, exhausting bore 314 and exhausting outlet 322 to lower the pressure of the operating object (exhausting).

For performing the pressing operation again, the current supply to the actuating shape memory alloy wire 562 is ceased. At this time, the actuating shape memory alloy wire 562 relaxes by the weight of the actuating block 564 and the action of the actuating spring 566, and the actuating block 564 is lowered. In addition, the third bias spring 530 applies the biasing force upon the actuating body 528 to move the valve spool 520 to its first position. Then, the valve 500 is returned to the state as illustrated in Figure 7.

In a valve utilising shape memory alloys according to the present invention as described above, a Joule effect by current passing through shape memory alloys is utilised for controlling the opening/closing of the valve to enable a prompt and accurate control of the opening/closing operation of the valve.

Also, the open state can be continuously maintained by a holding unit without continuously supplying the current to the shape memory alloys, which not only prevents the loss of the shape memory characteristic of shape memory alloys but also economises the electric power consumption while more accurately carrying out the opening/closing operation of the valve.

In addition to these, a valve utilising shape memory alloy wire of the present invention is simple in its structure to facilitate the design and manufacture thereof, thereby reducing manufacturing cost.

Furthermore, by utilising the electrically-controlled shape memory alloys, there is provided an anti-lock brake system simple in its structure, easy to be manufactured and low in price. In an anti-lock brake system of the present invention, the opening/closing operation of the valve can be accurately performed even without continuously supplying the current to the shape memory alloys to slightly consume the electric power and secure reliability during the operation thereof.

Whilst the present invention has been particularly shown and described with reference to particular embodiments thereof, it will be understood that various changes in form and details may be effected without departing from the scope of the invention as defined by the appended claims.

## Claims

1. A valve having a movable valve member for controlling a liquid or fluid path, said valve member being movable between first and second positions, and said valve comprising actuating means arranged to move said valve member to its first and to its second position, wherein said selectively actuating means comprises a shape memory alloy member arranged to change shape or dimension upon the application of electrical current thereto whereby said valve member is moved.

2. A valve as claimed in Claim 1, further comprising biasing means acting to maintain said valve member in its first position, and wherein the application of electrical current to said shape memory alloy member is arranged to cause said actuating means to move the valve member to its second position against the force of said biasing means.

3. A valve comprising an electronic control unit for generating a control current, a housing having a bore with a first inlet therein, a valve member movable between a first position in which it closes the first inlet and a second position at which is open, biasing means applying a biasing force to said valve member, and actuating means utilising shape memory alloy means for moving said valve member between its first and second positions by means of the control current supplied from said electronic control unit whereby the first bore is selectively opened and closed.

4. A valve as claimed in Claim 2 or Claim 3, wherein said biasing means comprises a plate spring applying an upward biasing force to said valve member by a snap-through buckling to maintain said valve member in its first position, and wherein said plate spring is also arranged to applying a downward biasing force by the snap-through buckling to maintain said valve member in its second position.

5. A valve having first and second ports, and valve means for opening and closing said ports, the valve means being movable between a first position in which the first port is open and the second port is closed, and a second position in which the first port is closed and the second port is open, biasing means arranged to bias said valve means to its first position, and actuating means arranged to move said valve means to its second position against the action of said biasing means.

6. A valve as claimed in Claim 5, wherein said valve means comprises a single, reciprocable valve member, and wherein said actuating means utilises shape memory alloy means to move said valve means.

7. A valve as claimed in Claim 5, wherein said valve means comprises a first valve member movable for controlling the opening and closing of said first port, and a second valve member movable for controlling the opening and closing of said second port, and said actuating means is common to both of said valve members, and wherein said actuating means utilises shape memory alloy means to move said valve means.

8. An anti-lock braking system for a vehicle comprising at least one supply pipe for supplying pressurised liquid or fluid to elements of the system, and comprising a valve as claimed in any preceding claim to control the flow of pressurised liquid or fluid in said supply pipe.

9. An anti-lock braking system comprising a master cylinder for operating a vehicle brake, regulating means for controlling the pressure of brake fluid in said master cylinder, and valve means for controlling the flow of brake fluid in said braking system, the braking system further comprising sensor means for sensing parameters of the braking operation, and electronic control means responsive to said sensor means for generating control signals, wherein said valve means comprise shape memory alloys arranged to change shape or dimension upon the application of electrical current thereto such that said valve means are directly responsive to control signals generated by said electronic control means.

10. An anti-lock brake system comprising:
a master cylinder for generating fluid pressure for a wheel brake of a vehicle;
a pressure regulator for regulating the pressure of said master cylinder;
an accumulator linked to said regulator for storing fluid;
a wheel-speed sensor for sensing a wheel speed to generate a wheel-speed signal;
a vehicle speed sensor for sensing a vehicle speed to generate a vehicle-speed signal;
an electronic control unit for receiving the vehicle-speed signal and the wheel-speed signal, and generating electrical control currents in dependence upon the difference between the vehicle-speed signal and the wheel-speed signal;
and valve means for controlling the pressure of said wheel brake in response to said control currents, said valve means utilising a plurality of shape memory alloys.
